# EUROPEAN PATENT SPECIFICATION

(11) **EP 2 019 083 B1**
(45) Date of publication and mention of the grant of the patent: **05.10.2011**
(21) Application number: 08160973.7
(22) Date of filing: 23.07.2008
(51) Int. Cl.: C01B 3/06, H01M 8/06

(54) **Preparation of a hydrogen source for fuel cells**
Herstellung einer Wasserstoffquelle für Brennstoffzellen
Préparation d'une source d'hydrogène pour piles à combustible

(30) Priority: 26.07.2007 US 962107 P
(43) Date of publication of application: 28.01.2009
(73) Proprietor: Rohm and Haas Company, Philadelphia, PA 19106-2399 (US)
(72) Inventor: Yamamoto, John Hiroshi, New Britain PA 18901 (US)
(74) Representative: Kent, Venetia Katherine

(56) References cited:
- EP-A- 1 857 410
- WO-A-99/07712
- WO-A-2005/074586
- US-A- 2 756 259
- LIN J T ET AL: "Convenient Synthesis of [Et4N]2[M2(CO)8(mu-H)2] (M = Mo, W)" ORGANOMETALLICS, vol. 17, no. 16, 1998, page 3619, XP009108757 ISSN: 0276-7333

## Description

### Background

This invention relates generally to a method for preparing a hydrogen source for fuel cells, which comprises ammonium borohydride or ammonium borane, from a slurry of sodium borohydride and a sodium alkoxide in a liquid hydrocarbon.

Processes for production of ammonium borohydride from liquid sodium borohydride (LSBH) or solid sodium borohydride products are known, but are inefficient in that they use purified sodium borohydride products or non-commercial reaction mixtures as starting materials. For example, U.S. Pat. No. 2,756,259 describes production of ammonium borohydride from a "dry" reaction mixture containing sodium borohydride and a sodium alkoxide.

WO 2005/07458682 discloses a method of production of boron borohydride ammonium salts one disclosed method comprising the reaction of sodium borohydride in methanol with Et₄NBr.

The problem addressed by this invention is to provide a more efficient process for producing a hydrogen source for fuel cells using the reaction mixture from a conventional sodium borohydride synthesis.

### Statement of Invention

The present invention in its various aspects is as set out in the appended claims.

The present invention is directed to a method for producing a hydrogen source for fuel cells from a slurry of sodium borohydride and a sodium alkoxide in a liquid hydrocarbon. The method comprises combining said slurry with 0.99 to 1.01 equivalents of NR4(X), and at least one solvent selected from the group consisting of water and methanol; wherein X is halide, hydroxide, alkoxide, acetate or propionate; and each R independently is hydrogen, alkyl, aryl or aralkyl.

### Detailed Description

Unless otherwise specified, all percentages herein are stated as weight percentages and temperatures are in °C.

An "aralkyl" group is an alkyl group substituted by an aryl group, e.g., benzyl, phenylethyl, etc. An "alkyl" group is a saturated hydrocarbyl group having from one to twenty carbon atoms, and may be linear, branched or cyclic. In some embodiments of the invention, alkyl groups are linear or branched, alternatively they are linear. In some embodiments, alkyl groups have from one to ten carbon atoms, alternatively from one to six carbon atoms, alternatively from one to four carbon atoms. An "aryl" group is a substituent derived from an aromatic hydrocarbon compound. An aryl group has a total of from six to twenty ring atoms, and has one or more rings which are separate or fused, and may be substituted by alkyl or halo groups. In some embodiments of the invention, an aryl group is a phenyl or tolyl group.

Without being bound to theory, it is believed that reaction of sodium borohydride with an unsubstituted ammonium salt produces ammonium borohydride, NH₄BH₄, and at temperatures above -40°C, the ammonium borohydride decomposes partially or completely to ammonium borane, NH₃BH₃ and hydrogen gas. Depending on the temperature of the reaction and the temperature at which the product is maintained, the product may comprise ammonium borohydride, ammonium borane, or a mixture thereof. When substituted ammonium salts are used as starting materials, the substituted ammonium borohydride product is stable.

Each "R" group in NR₄BH₄ or NR₄(X) independently is hydrogen, alkyl, aryl or aralkyl; i.e., there may be a mixture of different alkyl, aryl or aralkyl groups, or the groups may be the same. In some embodiments of the invention, each R independently is hydrogen, C₁-C₁₀ alkyl, phenyl, tolyl or benzyl; alternatively hydrogen or C₁-C₆ alkyl, alternatively hydrogen or C₁-C₄ alkyl. In some embodiments of the invention, each R is the same group, preferably the same alkyl group. In some embodiments of the invention, each R is hydrogen, i.e., NR₄ is unsubstituted ammonium, NH₄.

The liquid hydrocarbon used in the present invention is any hydrocarbon which is liquid at 25°C. Suitable hydrocarbons include alkanes, e.g., mineral oil; and aromatics. Mineral oil is particularly preferred. Preferably, the amount of liquid hydrocarbon in the initial slurry is from 0.01 L/g NaBH₄ to 10 L/g NaBH₄, alternatively from 0.2 L/g NaBH₄ to 1 L/g NaBH₄.

In embodiments of the invention in which X is an alkoxide, the alkoxide is a C₁-C₁₂ alkoxide, alternatively a C₁-C₈ alkoxide, alternatively a C₁-C₄ alkoxide. In preferred embodiments, the alkoxide is methoxide, ethoxide, isopropoxide or t-butoxide. Methoxide is particularly preferred. In some embodiments of the invention, X is halide, hydroxide, C₁-C₄ alkoxide, acetate or propionate; alternatively chloride, bromide, iodide, hydroxide, methoxide, ethoxide, acetate or propionate.

In some embodiments of the invention, the amount of ammonium salt, NR₄(X) used is from 0.995 to 1.005 equivalents with respect to the amount of sodium borohydride in the slurry, alternatively about one equivalent. In some embodiments of the invention, the sodium alkoxide and sodium borohydride in the slurry are in a molar ratio of about 3:1, alkoxide:borohydride.

An equation describing the reaction which occurs in a mixed hydrocarbon/water medium, with the sodium alkoxide (present at 3:1 relative to NaBH₄) represented as NaOR¹, is as follows:

NR₄(X) + 3H₂O + 3NaOR¹ + NaBH₄ → 3NaOH + 3R¹OH + NaX + NR₄BH₄(s)

NR₄BH₄ is insoluble in the aqueous/hydrocarbon reaction medium, and thus will form a precipitate. NaX may also be insoluble, depending on the nature of X. In cases where NaX is soluble, the MBH₄ can be isolated by filtration, with the filtrate containing a hydrocarbon phase, and an aqueous alcohol/NaX phase or alcohol/NaX phase, depending on whether water or methanol is added, respectively. If NaX is insoluble, further separation is required to obtain pure NR₄BH₄, e.g., by washing with water.

Preferably, the reaction temperature is from 100°C to 100°C. In some embodiments, methanol is the solvent, and the temperature is at least -80°C, alternatively at least -70°C, alternatively at least -60°C; and no greater than -40°C. It is believed that, when each R is hydrogen, ammonium borohydride forms and can remain stable at temperatures no greater than -40°C. If ammonium borohydride is desired as a product, these low temperatures must be maintained. Solid ammonium borohydride will precipitate from methanol, and can be collected by low-temperature filtration. In other embodiments, in which conversion of ammonium borohydride to ammonium borane is not disadvantageous, the reaction temperature is from -10°C to 100°C. In some embodiments, the reaction temperature is at least 0°C, alternatively at least 10°C, alternatively at least 20°C; the reaction temperature is no greater than 80°C, alternatively no greater than 70°C, alternatively no greater than 60°C. In embodiments where water is added, preferably, the amount of water added is from 38 g/g NaBH₄ to 68 g/g NaBH₄, alternatively from 43 g/g NaBH₄ to 53 g/g NaBH₄- In embodiments where methanol is added, preferably, the amount of methanol added is from 38 g/g NaBH₄ to 68 g/g NaBH₄, alternatively from 43 g/g NaBH₄ to 53 g/g NaBH₄.

The sodium alkoxide in the slurry, NaOR¹, preferably is a C₁-C₁₂ alkoxide, alternatively a C₁-C₈ alkoxide, alternatively a C₁-C₄ alkoxide. In preferred embodiments, the alkoxide is methoxide, ethoxide, isopropoxide or t-butoxide. Methoxide is particularly preferred.

In some embodiments of the invention, NR₄(X) and methanol and/or water are added together to the slurry. The NR₄(X) can be dissolved or slurried in the methanol and/or water. Additional methanol and/or water may be added to facilitate handling, if necessary.

## Claims

1. A method for producing a hydrogen source for fuel cells from a slurry of sodium borohydride and a sodium alkoxide in a liquid hydrocarbon; said method comprising combining said slurry with 0.99 to 1.01 equivalents of NR₄(X), and at least one solvent selected from the group consisting of water and methanol; wherein X is halide, hydroxide, alkoxide, acetate or propionate; and each R independently is hydrogen, alkyl, aryl or aralkyl.

2. The method of claim 1 in which said at least one solvent is water.

3. The method of claim 2 in which the sodium alkoxide is sodium methoxide.

4. The method of claim 3 in which the liquid hydrocarbon is mineral oil.

5. The method of claim 4 in which X is chloride, bromide, iodide, hydroxide, methoxide, ethoxide, acetate or propionate; and each R independently is hydrogen, C₁-C₁₀ alkyl, phenyl, benzyl or tolyl.

6. The method of claim 5 in which each R is hydrogen and the reaction temperature is from 0°C to 100°C.

7. The method of claim 1 in which said at least one solvent is methanol.

8. The method of claim 7 in which the sodium alkoxide is sodium methoxide and the liquid hydrocarbon is mineral oil.

9. The method of claim 8 in which X is chloride, bromide, iodide, hydroxide, methoxide, ethoxide, acetate or propionate; and each R independently is hydrogen, C₁-C₁₀ alkyl, phenyl, benzyl or tolyl.

10. The method of claim 9 in which each R is hydrogen and the reaction temperature is from 0°C to 100°C.

## Patentansprüche

1. Verfahren zur Herstellung einer Wasserstoffquelle für Brennstoffzellen aus einer Aufschlämmung von Natriumborhydrid und einem Natriumalkoxid in einem flüssigen Kohlenwasserstoff; wobei das Verfahren das Vereinigen der Aufschlämmung mit 0,99 bis 1,01 Äquivalenten an NR₄(X) und mindestens einem Lösungsmittel, ausgewählt aus der Gruppe, bestehend aus Wasser und Methanol, umfasst; wobei X Halogenid, Hydroxid, Alkoxid, Acetat oder Propionat ist; und jedes R unabhängig Wasserstoff, Alkyl, Aryl oder Aralkyl ist.

2. Verfahren nach Anspruch 1, in welchem das mindestens eine Lösungsmittel Wasser ist.

3. Verfahren nach Anspruch 2, in welchem das Natriumalkoxid Natriummethoxid ist.

4. Verfahren nach Anspruch 3, in welchem der flüssige Kohlenwasserstoff Mineralöl ist.

5. Verfahren nach Anspruch 4, in welchem X Chlorid, Bromid, lodid, Hydroxid, Methoxid, Ethoxid, Acetat oder Propionat ist; und jedes R unabhängig Wasserstoff, C₁-C₁₀ Alkyl, Phenyl, Benzyl oder Tolyl ist.

6. Verfahren nach Anspruch 5, in welchem jedes R Wasserstoff ist und die Reaktionstemperatur von 0°C bis 100°C beträgt.

7. Verfahren nach Anspruch 1, in welchen das mindestens eine Lösungsmittel Methanol ist.

8. Verfahren nach Anspruch 7, in welchem das Natriumalkoxid Natriummethoxid ist und der flüssige Kohlenwasserstoff Mineralöl ist.

9. Verfahren nach Anspruch 8, in welchem X Chlorid, Bromid, lodid, Hydroxid, Methoxid, Ethoxid, Acetat oder Propionat ist; und jedes R unabhängig Wasserstoff, C₁-C₁₀ Alkyl, Phenyl, Benzyl oder Tolyl ist.

10. Verfahren nach Anspruch 9, in welchem jedes R Wasserstoff ist und die Reaktionstemperatur von 0°C bis 100°C beträgt.

## Revendications

1. Procédé de production d'une source d'hydrogène pour des piles à combustible à partir d'une suspension épaisse de borohydrure de sodium et d'un alcoxyde de sodium dans un hydrocarbure liquide ; ledit procédé comprenant la combinaison de ladite suspension épaisse avec 0,99 à 1,01 équivalents de NR₄(X), et au moins un solvant choisi dans le groupe constitué par l'eau et le méthanol ; X étant un halogénure, hydroxyde, alcoxyde, acétate ou propionate ; et chaque R étant indépendamment un atome d'hydrogène, un alkyle, aryle ou aralkyle.

2. Procédé selon la revendication 1, dans lequel ledit au moins solvant est l'eau.

3. Procédé selon la revendication 2, dans lequel l'alcoxyde de sodium est un méthoxyde de sodium.

4. Procédé selon la revendication 3, dans lequel l'hydrocarbure liquide est une huile minérale.

5. Procédé selon la revendication 4, dans lequel X est un chlorure, bromure, iodure, hydroxyde, méthoxyde, éthoxyde, acétate ou propionate ; et chaque R est indépendamment un atome d'hydrogène, un alkyle C₁-C₁₀, phényle, benzyle ou tolyle.

6. Procédé selon la revendication 5, dans lequel chaque R est un atome d'hydrogène et la température réactionnelle est de 0 à 100 °C.

7. Procédé selon la revendication 1, dans lequel ledit au moins solvant est le méthanol.

8. Procédé selon la revendication 7, dans lequel l'alcoxyde de sodium est un méthoxyde de sodium et l'hydrocarbure liquide est une huile minérale.

9. Procédé selon la revendication 8, dans lequel X est un chlorure, bromure, iodure, hydroxyde, méthoxyde, éthoxyde, acétate ou propionate ; et chaque R est indépendamment un atome d'hydrogène, un alkyle C₁-C₁₀, phényle, benzyle ou tolyle.

10. Procédé selon la revendication 9, dans lequel chaque R est un atome d'hydrogène et la température réactionnelle est de 0 à 100 °C.
